# EUROPEAN PATENT SPECIFICATION

(11) **EP 0 636 472 B1**
(45) Date of publication and mention of the grant of the patent: **23.12.1998**
(21) Application number: 94202209.6
(22) Date of filing: 28.07.1994
(51) Int. Cl.: B32B 27/12

(54) **Fibre-reinforced composites**
Faserverstärkte Verbundwerkstoffe
Matériaux composites renforcés par des fibres

(30) Priority: 28.07.1993 EP 93202236
(43) Date of publication of application: 01.02.1995
(73) Proprietor: SHELL INTERNATIONALE RESEARCH MAATSCHAPPIJ B.V., 2596 HR Den Haag (NL)
(72) Inventor: Elmendorp, Jacob Jacobus, NL-1031 CM Amsterdam (NL); Gillemans, Johannes Carolus Maria, NL-1031 CM Amsterdam (NL)

(56) References cited:
- EP-A- 0 320 049
- GB-A- 2 043 532
- GB-A- 2 203 095

## Description

The present invention relates to fibre-reinforced composites and more in particular to such composites comprising two or more layers of a fibre-reinforced, crosslinked epoxy resin, wherein the adjacent epoxy resin layers are interspaced with a layer of a thermoplastic resin, to the preparation of said composites and to their use.

Reinforced composites or composite materials have many excellent properties such as high specific strength, engineerability and low energy content, but they also have a number of limitations. As these fibre-reinforced composite materials are generally characterised by a high stiffness, bending of such composites will induce high shear stresses in planes parallel to the principle fibre direction. When the composites are submitted to impact testing they show an unacceptable degree of delamination. It is generally understood that this problem is related to the insufficient ability of the composite materials to dissipate the impact energy.

It has been proposed to improve the performance of the fibre-reinforced composites as described hereinbefore, including the damage-tolerance of said composites, by reducing the crosslink density of the polymer matrix or by incorporating therein an elastomeric compound. However these methods do, in general, not provide the desired results.

Another known modification for said reinforced composites comprises the replacement of the thermoset matrix by a thermoplastic one. Although said method improves the strain resistance of the polymer matrix, compression strength is simultaneously reduced to an unacceptably low level, due to the generally lower stiffness of the thermoplastic matrix.

Yet another method for improving the overall performance of the fibre-reinforced, crosslinked epoxy resin composites comprises the insertion of a thermoplastic film, for example, made from Nylon-6, between the different layers of reinforced epoxy resin during the preparation of said composites. However, with this method it has been experienced that the performance is hampered by insufficient adhesion between the thermoplastic interlayer and the thermoset matrix.

Hence it can be concluded that there still is a need to improve the overall performance of fibre-reinforced, crosslinked epoxy resin composites.

The problem underlying the present invention is to develop a fibre-reinforced, crosslinked epoxy resin based composite, which does not suffer from one or more of the problems described hereinbefore, i.e. a composite having an improved overall performance.

As a result of extensive research and experimentation it was surprisingly found possible to prepare a fibre-reinforced, crosslinked epoxy resin based composite having such an improved performance, by inserting between adjacent layers of fibre reinforced epoxy resin a layer of a linear polymer of carbon monoxide and one or more olefinically unsaturated compounds, wherein the monomer units originating in carbon monoxide and monomer units originating in the olefinic unsaturated compounds are present in an alternating arrangement. The resulting fibre-reinforced composite is novel.

Accordingly the invention provides a composite comprising two or more layers of a fibre-reinforced, crosslinked epoxy resin, wherein adjacent layers of the reinforced epoxy resin are interspaced with a layer of a thermoplastic polymer, which thermoplastic polymer comprises a linear polymer of carbon monoxide with one or more olefinically unsaturated compounds, wherein the monomer units originating in carbon monoxide and the monomer units originating in the olefinically unsaturated compounds are present in an alternating arrangement.

In the context of the present invention the term epoxy resin refers to a compound, having on average more than one α-epoxide group per molecule, and which can be converted to a thermoset product.

The epoxide group is preferably a glycidyl ether or a glycidyl ester group, the glycidyl ether groups being especially preferred. Suitable epoxy resins include diglycidyl ethers of diphenylol propane, polyglycidyl ethers of novolac resins, di- or polyglycidyl ethers of other di- or polyfunctional aromatic hydroxy compounds and di- or polyglycidyl esters of di- or polycarboxylic acids, which acids include aliphatic and aromatic di- or polycarboxylic acids. Diglycidyl ethers of diphenylol propane and polyglycidyl ethers of novolac resins are preferred epoxy resins for the composites of the present invention.

The fibre reinforcement present in the crosslinked epoxy resin layers of the composite will generally be present as an unidirectional fibre reinforcement or as a woven fabric. The nature of the fibre is not critical and may vary widely. The fibres include fibres made from glass, carbon, boron or aramide.

The fibre content of the crosslinked epoxy resin layers will generally be in the range of from 40 to 60% by volume and preferably in the range of from 50 to 60% by volume. Unidirectional fibre reinforcements are preferred.

When unidirectional fibre reinforcement is applied it is possible that the fibre directions in the crosslinked epoxy resin layers are the same, or that the fibre directions in the different layers are random with respect to one another. It may be advantageous to have the fibre directions in the different epoxy resin layers orientated according to a specific pattern, for example, such that the fibre directions in two adjacent layers form an angle of 45° whilst the fibre directions in every first and third layer are orientated perpendicular to one another. Also when using a woven fabric as the reinforcement it is possible to have the weave direction orientated according to a specific pattern.

Composites as described hereinbefore wherein the fibre reinforcement in some of the layers is a unidirectional fibre reinforcement, while in other layers a woven fabric is used, are also considered to form part of the present invention, as are those composites wherein a single epoxy resin layer may contain more than one layer of reinforcement.

The polymers of carbon monoxide with one or more olefinically unsaturated compounds, hereinafter referred to as linear alternating copolymers, are typically based on an olefinically unsaturated compound which is a hydrocarbon. They may suitably be copolymers of carbon monoxide and one olefinically unsaturated compound, e.g. ethene or propene. Preferably the single olefinically unsaturated compound is ethene. Other suitable polymers of carbon monoxide with one or more olefinically unsaturated compounds are terpolymers of carbon monoxide with two olefinically unsaturated compounds, especially with ethene and a second olefinically unsaturated compound such as propene, butene, pentene, hexene, heptene, octene, nonene, decene, dodecene, styrene, methyl acrylate, methyl methacrylate, vinyl acetate, undenoic acid, undecenol, 6-chlorohexene, N-vinylpyrrolidene and the diethylester of vinyl-phosphonic acid. With said terpolymers it is preferred that ethene is present as the major olefinically unsaturated compound. More preferably the molar ratio of ethene to the second olefinically unsaturated compound ranges from 3:1, and especially from 6:1, typically to 50:1. A terpolymer of carbon monoxide with ethene and propene is a preferred terpolymer.

The linear polymers of carbon monoxide with one or more olefinically unsaturated compounds are known per se, for example from EP-A 121965, EP-A 213671, EP-A 229408 and US-A 3914391; likewise methods for the preparation of said polymers are also known from these references.

With the composites of the present invention it is preferred that the LVN (Limiting Viscosity Number) of the linear alternating copolymers, is in the range of from 0.7 to 1.8 dl/g, when measured in m-cresol at 60 °C.

The number of layers of reinforced, cross linked epoxy resin and of the linear alternating copolymer, as well as the thicknesses of the layers, will be largely determined by the ultimate requirements. Generally the thickness of the thermoplastic polymer layer(s) will be in the range of from 10 to 100 µm and preferably in the range of from 20 to 50 µm, while the thicknesses of the reinforced, crosslinked epoxy resin layers will generally be in the range of from 5 to 15 times the (average) thickness of the thermoplastic polymer layer(s).

Although the composites of the present invention will generally be composed of flat layers of reinforced, crosslinked epoxy resin interspaced with one or more flat layers of linear alternating copolymer, it is also possible for the composing layers not to be flat, but curved in one or two directions.

A further aspect of the present invention relates to a method for the preparation of the composites as described hereinbefore. Said preparation may conveniently comprise stacking layers of a fibre reinforced, crosslinkable epoxy resin system and layers of the linear alternating copolymer in an alternating arrangement, and converting the stack thus obtained into a composite by curing the epoxy resin whilst applying pressure onto the stacked layers.

In the context of the present invention the term crosslinkable epoxy resin system refers to a system comprising all the components which are essential to provide a crosslinked epoxy resin matrix. When curing can be effected by exposing such a system to heat, the system includes, in addition to a crosslinkable epoxy resin, at least a curing agent. Further additives and ingredients may be present, an accelerator being an example of a further additive.

The nature of the curing agent is not critical, and may vary widely in composition provided it is of a type which in combination with a suitable epoxy resin and optionally in the presence of an accelerator, will result, after reaction at elevated temperature, in a crosslinked epoxy resin matrix.

Suitable curing agents include amino type curing agents, boron trifluoride complexes and acid curing agents. The nature of the accelerator, when used, will be determined by the type of curing agent and the curing or crosslinking conditions applied.

Suitable crosslinkable epoxy resin systems are well known from many publications and Handbooks, including for example Handbook of Epoxy resins, H.Lee & K.Neville McGraw-Hill, New York. Moreover such epoxy resin systems are commercially available as ready-for-use compositions.

One of the problems related to the preparation of the composites of the present invention, is applying the crosslinkable epoxy resin system to the fibre reinforcement, and the subsequent handling of the reinforcement-containing epoxy resin system. Hence in the preparation of the composites of the present invention it is preferred to employ as the reinforcement-containing, crosslinkable epoxy resin a so-called prepreg, being a fibre reinforcement which has been impregnated with an epoxy resin system.

Said impregnation of the reinforcement is conducted in such a manner that the resulting prepreg can be stored until required for further processing, e.g. to a finished composite, without requiring the addition of further ingredients. The preparation of prepregs in general, and those based on epoxy resins in particular is known, and moreover such materials are commercially available. Details regarding the procedures which can be followed in the preparation of said prepregs, as well as the nature of the epoxy resin systems which can be employed in the preparation of said prepregs have been described for example in the brochures EK 4.9.8 (issued June 1992) and EK 4.9 (issued January 1989), which are available from Shell Chemical Company Ltd. Such prepregs possess a degree of coherence and have the appropriate degree of tack and thus afford easy handling.

In the stacking operation which preceeds the moulding step, the interspacing layers of linear alternating copolymer of the ultimate composite can be introduced in the form of e.g. a molten layer, a powder or a film, or can be cast from a solution; preferably the linear alternating copolymer is used in the form of a film.

During said stacking operation, when appropriate, care should be taken that the fibre direction in each of the layers of reinforced epoxy resin system corresponds with the desired pattern for fibre directions throughout the ultimate composite. One or more of the reinforced, cross linked epoxy resin layers of the ultimate composite may each be based on more than one layer of fibre reinforcement-containing crosslinkable epoxy resin system. Under those circumstances the stacking sequence will be adjusted accordingly.

The stacked layers of reinforcement containing epoxy resin system and of linear alternating copolymer are suitably transferred to a mould of a selected size and shape. The mould will generally be brought to a temperature which is similar to the temperature at which the resin can be cured and will typically be in the range of from 125 to 200 °C. The temperature may primarily be governed by the curing schedule of the epoxy resin system and to a lesser extent by the crystalline melting point of the linear alternating copolymer. It is preferred that the mould temperature does not exceed the crystalline melting point of the copolymer.

Subsequent to closing the mould, the contents thereof may be given sufficient time to reach at least the gel stage, which time is primarily related to the thickness of the sample to be moulded, and for example can be less than 1 min for a 3 mm plate, before gradually building up the pressure in the mould to the required level. The overall moulding time will be related to the nature of the epoxy resin system, but should be sufficient to provide a crosslinked epoxy resin matrix and good interlaminar adhesion at the temperature of operation. The moulding technique described here is frequently referred to by the term "compression moulding".

As mentioned hereinbefore it is conceivable that for certain applications it may be desirable to have composites wherein the different layers of cross linked epoxy resin and the interspacing layers of the linear alternating copolymer are not flat but curved. One method to achieve this would be to already introduce the shaping during the stacking, e.g. by using a substrate for the stacking operation which has the desired shape, and subsequently transferring the resulting stack comprising the shaped layers, optionally together with the shaped substrate, to a suitable mould.

Alternatively it is possible to shape the composite after curing, viz. by heating it to a temperature which is above the glass transition temperature of the crosslinked epoxy resin matrix and also above the crystalline melting point of the linear alternating copolymer.

The composites of the present invention not only have superior performance properties compared to those of the corresponding composites wherein the interspacing layers of the linear alternating copolymer of carbon monoxide and one or more olefinically unsaturated compounds are absent, but also compared to those wherein the interspacing layers are based on Nylon 6.

One of the characterising features of the composites of the present invention is their surprising ability for damping vibrations, thus making them potentially valuable outlets for those applications where this property is an important requirement, such as for certain sportsgoods, and in blades for aircraft propellers and windmills.

The invention will be further illustrated with the following example for which the following information is provided.

### Prepreg

The prepreg was prepared on a hot-melt prepregger, using an OCF RPA/038 glass roving (2400 tex) ex Owens Corning as the fibre reinforcement and an EPIKOTE DX-6104/EPIKURE DX-6906 blend (ex Shell Chemicals) in a 100.0/0.8 weight ratio as the epoxy resin system (EPIKOTE and EPIKURE are Trademarks). The glass fibre was orientated unidirectionally. The prepreg comprised 55% by volume of glass fibre.

Details of the composition and procedures followed have been described in the brochures EK 4.9.8 (Issued June 1992) and EK 4.9 (Issued January 1989) which are available from Shell Chemical Company Ltd.

### Linear alternating copolymer

The polymer used was a terpolymer based on carbon monoxide, ethene and propene. The polymer had a crystalline melting point of 214 °C and a limiting viscosity number of 1.1 dl/g.

The polymer was used in the form of a slit-extruded film having a thickness of 40 µm.

### Thermoplastic polymer for comparative experiment.

In the comparative experiment a nylon-6 film ex DAKA, Oss (The Netherlands) was used, having a thickness of 25µm.

### Test procedures

1) The performance characteristics of the composites were assessed via a "compression after impact" procedure according to the Boeing BSS 7260-class 1 norm. Laminates of 10.2 x 15.2 cm (4x6 inches) were impacted using a falling weight apparatus with a 6.7 kJ/m (1500 inch-lbs/inch) impact energy.
   The extent of the damage resulting from the impact testing was determined with the aid of the C-scan technique.
   Subsequent to impacting the samples were compression tested on a 100 tons servo-hydrolic tensile tester using the prescribed support rig.
2) Interfacial bonding between the thermoplastic polymer layers and the reinforced, crosslinked epoxy resin layers was determined via the Interlaminar Shear test carried out according to ISO 4585. To accommodate for the difference in thickness of the different types of composite tested, the sample size was normalised to a length and width of 6 and 3.3 times the laminate thickness, respectively. A span ratio of 5 was used according to the above mentioned test method.

### Example 1

16 Layers of the prepreg (22 x 30 cm) prepared as described hereinbefore were stacked in a [45/90/-45/0]₂ₛ sequence with a 40µm film of said linear alternating copolymer in between the consecutive layers of prepreg. The formula indicates that there is an angle of 45° between the fibre directions of two consecutive layers, that the stack compresses 16 layers of prepreg, that said sequence for the fibre direction occurs twice in each half of the stack and that the fibre direction sequence in the top and bottom half of the stack form a mirror image.

The stacked layers of prepreg and linear alternating copolymer were transferred to a mould of corresponding dimensions and having a temperature of 160 °C. The mould was closed and after 20 s the pressure in the mould was built-up gradually within 100 s to a pressure which corresponded with a force of 300 KN on the mould. This pressure was maintained for 7 min while simultaneously keeping the mould temperature at 160 °C before opening the mould and allowing the composite to cool to ambient temperature.

The composite preparation was repeated a number of times in order to have sufficient material available for testing.

The results of the tests to which the composites were submitted have been collected in Tables 1 and 2.

### Comparative experiment 1.

The procedure as described in Example 1 was repeated but omitting the insertion of the film based on the linear alternating copolymer between the layers of prepreg.

The thus prepared composites were also tested, the data having been included in Tables 1 and 2.

### Comparative experiment 2.

The procedure as described in Example 1 was repeated but replacing the film based on the linear alternating copolymer with a Nylon-6 film of 25 µm thickness. The test results have also been included in Table 1 and 2.

**Table 1**

| Composite | | Thickness mm | Impact | | Compression | |
|---|---|---|---|---|---|---|
| | | | energy J(inch-lbs) | damage cm² | strength MPa | max load kN |
| | | | | | | |

| Example I | | | | | | |
|---|---|---|---|---|---|---|
| Specimen | 1* | 5.02 | 33.4 (296) | 4.0 | 219 | 112 |
| | 1a* | 5.00 | 33.3 (295) | 4.0 | 241 | 123 |
| | 2 | 4.84 | 32.3 (286) | 3.1 | 235 | 116 |
| | 2a | 4.83 | 32.2 (285) | 2.5 | 240 | 118 |
| | 3 | 4.94 | 33.0 (292) | 3.3 | 246 | 124 |
| | 3a | 4.96 | 33.1 (293) | 3.3 | 246 | 124 |

| Comp.exp 1 | | | | | | |
|---|---|---|---|---|---|---|
| Specimen | 1 | 4.31 | 28.8 (255) | 6.1 | 223 | 98 |
| | 1a | 4.31 | 28.8 (255) | 6.1 | 192 | 84 |
| | 2 | 4.31 | 28.8 (255) | 5.9 | 196 | 86 |
| | 2a | 4.31 | 0 (0) | - | 252 | 110 |
| | 3 | 4.31 | 28.8 (255) | 6.1 | 217 | 95 |
| | 3a | 4.30 | 28.7 (254) | 5.6 | 221 | 97 |
| | 4 | 4.34 | 28.9 (256) | 6.6 | 215 | 95 |
| | 4a | 4.34 | 28.9 (256) | 6.4 | 214 | 95 |

| Comp.exp 2 | | | | | | |
|---|---|---|---|---|---|---|
| Specimen | 1 | 4.55 | 30.4 (269) | 22 | 150 | 69 |
| | 1a | 4.55 | 30.4 (269) | 20 | 158 | 73 |
| | 2 | 4.56 | 30.4 (269) | 21 | 137 | 64 |
| | 2a | 4.56 | 30.4 (269) | 18 | 136 | 64 |

| | | | | | | |
|---|---|---|---|---|---|---|
| * indicates that both specimens originate from the same composite sample. | | | | | | |

**Table 2**

| Composite | ILSS^{*}⁾ 0° | (MPa) 90° |
|---|---|---|
| Example 1 | 44 | 45 |
| Comp ex 1 | 45 | 45 |
| Comp ex 2 | 32 | 38 |

| | | |
|---|---|---|
| ^{*)} Interlaminar shear strength | | |

From the data presented in Tables 1 and 2 it can be concluded that the composites wherein the reinforced, crosslinked epoxy resin layers are interspaced with a layer of a linear alternating copolymer do indeed have superior performance properties when compared with the non-interspaced composites and those composites wherein the interspacing layer of thermoplastic polymer is based on Nylon-6. The improved interlaminar shear strength measured for the composites which contain layers of the linear alternating copolymer supports that the increased damage-tolerance of these composites is the result of an improved adhesion between the crosslinked epoxy resin and the linear alternating copolymer, as compared with the composite which comprises Nylon-6.

## Claims

1. A composite comprising two or more layers of fibre-reinforced, crosslinked epoxy resin, wherein adjacent layers of the reinforced, crosslinked epoxy resin are interspaced with a layer of a thermoplastic polymer, which thermoplastic polymer comprises a linear polymer of carbon monoxide with one or more olefinically unsaturated compounds wherein the monomer units originating in carbon monoxide and the monomer units originating in olefinically unsaturated compounds are present in an alternating arrangement.

2. A composite as claimed in claim 1, characterised in that the linear polymer is a copolymer of carbon monoxide and ethene.

3. A composite as claimed in claim 1, characterised in that the linear polymer is a terpolymer of carbon monoxide with ethene and one second olefinically unsaturated compound, ethene and the olefinically unsaturated compound being present in a molar ratio of at least 6:1.

4. A composite as claimed in any of claims 1 to 3, characterised in that the linear polymer has a limiting viscosity number (LVN) in the range of from 0.7 to 1.8 dl/g, measured in m-cresol at 60 °C.

5. A composite as claimed in any one of claims 1 to 4, characterised in that the epoxy groups of the epoxy resin are glycidyl ether or glycidyl ester groups.

6. A composite as claimed in claim 5, characterised in that the epoxy resins are diglycidyl ethers of diphenylol propane or polyglycidyl ethers of novolac resins.

7. A composite as claimed in any one of claims 1 to 6, characterised in that in each of the cross linked epoxy resin layers the fibre reinforcement is present as a unidirectional fibre reinforcement or as a woven fabric, the fibre content of the crosslinked epoxy resin layers being in the range of from 40 to 60% by volume.

8. A composite as claimed in claim 7, characterised in that the fibre content is in the range of from 50 to 60% by volume.

9. A composite as claimed in any one of claims 1 to 8, characterised in that the thickness of the interspacing layer(s) of the linear polymer is in the range of from 10 to 100 µm and preferably in the range from 20 to 50 µm, and the thicknesses of the reinforced cross linked epoxy resin layers are in the range of from 5 to 15 times the (average) thickness of the linear polymer layer(s).

10. A process for the preparation of the composites as claimed in claim 1, which comprises stacking layers of a fibre reinforced, crosslinkable epoxy resin system and one or more layers of the linear polymer in an alternating arrangement, and converting the stack thus obtained into a composite by curing the epoxy resin whilst applying pressure onto the stacked layers.

11. A process as claimed in claim 10, characterised in that the fibre-reinforced, crosslinkable epoxy resin system is an epoxy resin system based prepreg and in that the layer of the linear polymer is used in the form of a polymer film.

12. A process as claimed in claim 10 or 11, characterised in that the curing is conducted at a temperature in the range of from 125 to 200 °C and for a time sufficient to provide a crosslinked epoxy resin matrix and good interlaminar adhesion at the temperature of operation.

## Patentansprüche

1. Verbundwerkstoff, der zwei oder mehrere Schichten aus einem faserverstärkten, vernetzten Epoxyharz aufweist, worin zwischen benachbarten Schichten aus dem faserverstärkten Epoxyharz eine Schicht aus einem thermoplastischen Polymer angeordnet ist, welches thermoplastisches Polymer ein lineares Polymer aus Kohlenmonoxid und einer oder mehreren olefinisch ungesättigten Verbindungen ist, worin die vom Kohlenmonoxid abstammenden Monomereinheiten und die von den olefinisch ungesättigten Verbindungen abstammenden Monomereinheiten in einer alternierenden Anordnung vorliegen.

2. Verbundwerkstoff nach Anspruch 1, dadurch gekennzeichnet, daß das lineare Polymer ein Copolymer aus Kohlenmonoxid und Ethen ist.

3. Verbundwerkstoff nach Anspruch 1, dadurch gekennzeichnet, daß das lineare Polymer ein Terpolymer aus Kohlenmonoxid mit Ethen und einer zweiten olefinisch ungesättigten Verbindung ist, wobei Ethen und die olefinisch ungesättigte Verbindung in einem Molverhältnis von wenigstens 6:1 vorliegen.

4. Verbundwerkstoff nach einem der Ansprüche 1 bis 3, dadurch gekennzeichnet, daß das lineare Polymer eine Grenzviskositätszahl (LVN) im Bereich von 0,7 bis 1,8 dl/g, gemessen in m-Cresol bei 60°C, aufweist.

5. Verbundwerkstoff nach einem der Ansprüche 1 bis 4, dadurch gekennzeichnet, daß die Epoxygruppen des Epoxyharzes Glycidylether- oder Glycidylestergruppen sind.

6. Verbundwerkstoff nach Anspruch 5, dadurch gekennzeichnet, daß die Epoxyharze Diglycidylether von Diphenylolpropan oder Polyglycidylether von Novolakharzen sind.

7. Verbundwerkstoff nach einem der Ansprüche 1 bis 6, dadurch gekennzeichnet, daß in jeder der vernetzten Epoxyharzschichten die Faserverstärkung als eine unidirektionale Faserverstärkung oder als ein Gewebe vorliegt, wobei der Fasergehalt der vernetzten Epoxyharzschichten im Bereich von 40 bis 60 Vol.-% liegt.

8. Verbundwerkstoff nach Anspruch 7, dadurch gekennzeichnet, daß der Fasergehalt im Bereich von 50 bis 60 Vol.-% liegt.

9. Verbundwerkstoff nach einem der Ansprüche 1 bis 8, dadurch gekennzeichnet, daß die Dicke der Zwischenschicht(en) aus dem linearen Polymer im Bereich von 10 bis 100 µm und vorzugsweise im Bereich von 20 bis 50 µm liegt und die Dicke der verstärkten vernetzten Epoxyharzschichten im Bereich vom 5-fachen bis zum 15-fachen der (mittleren) Dicke der linearen Polymerschicht(en) liegt.

10. Verfahren zur Herstellung der Verbundwerkstoffe nach Anspruch 1, welches ein Stapeln von Schichten aus einem faserverstärkten, vernetzten Epoxyharzsystem und einer oder mehreren Schichten aus dem linearen Polymer in einer alternierenden Anordnung und ein Überführen des so erhaltenen Stapels in einen Verbundwerkstoff durch Härten des Epoxyharzes unter Anwendung von Druck auf die gestapelten Schichten umfaßt.

11. Verfahren nach Anspruch 10, dadurch gekennzeichnet, daß das faserverstärkte vernetzbare Epoxyharzsystem ein Prepreg auf Epoxyharzsystembasis ist und daß die Schicht aus dem linearen Polymer in der Form einer Polymerfolie verwendet wird.

12. Verfahren nach Anspruch 10 oder 11, dadurch gekennzeichnet, daß das Härten bei einer Temperatur im Bereich von 125 bis 200°C und während einer Zeit ausgeführt wird, die ausreicht, um eine vernetzte Epoxyharzmatrix und eine gute Interlaminaradhäsion bei der Betriebstemperatur auszubilden.

## Revendications

1. Composite comprenant deux ou plusieurs couches de résine époxy réticulée, renforcée aux fibres, dans lequel des couches adjacentes de la résine époxy réticulée, renforcée sont espacées par une couche d'un polymère thermoplastique, lequel polymère thermoplastique comprend un polymère linéaire de monoxyde de carbone avec un ou plusieurs composés oléfiniquement insaturés, dans lequel les unités monomères provenant du monoxyde de carbone et les unités monomères provenant des composés oléfiniquement insaturés sont présentes dans un agencement alterné.

2. Composite suivant la revendication 1, caractérisé en ce que le polymère linéaire est un copolymère de monoxyde de carbone et d'éthène.

3. Composite suivant la revendication 1, caractérisé en ce que le polymère linéaire est un terpolymère de monoxyde de carbone avec de l'éthène et un second composé oléfiniquement insaturé, l'éthène et le composé oléfiniquement insaturé étant présents dans un rapport molaire d'au moins 6/1.

4. Composite suivant l'une quelconque des revendications 1 à 3, caractérisé en ce que le polymère linéaire a un nombre de viscosité limite (NVL) dans la gamme de 0,7 à 1,8 dl/g, mesuré dans du m-crésol à 60°C.

5. Composite suivant l'une quelconque des revendications 1 à 4, caractérisé en ce que les groupes époxy de la résine époxy sont des groupes d'éther glycidylique ou d'ester glycidylique.

6. Composite suivant la revendication 5, caractérisé en ce que les résines époxy sont des éthers diglycidyliques de diphénylol propane ou des éthers polyglycidylique de résines novolaques.

7. Composite suivant l'une quelconque des revendications 1 à 6, caractérisé en ce que dans chacune des couches de résine époxy réticulée le renforcement de fibres est présent sous la forme d'un renforcement de fibres unidirectionnel ou d'un tissu tissé, la teneur en fibres des couches de résine époxy réticulée se situant dans la gamme de 40 à 60 % en volume.

8. Composite suivant la revendication 7, caractérisé en ce que la teneur en fibres se situe dans la gamme de 50 à 60 % en volume.

9. Composite suivant l'une quelconque des revendications 1 à 8, caractérisé en ce que l'épaisseur de la ou des couches d'espacement du polymére linéaire se situe dans la gamme de 10 à 100 µm et avantageusement dans la gamme de 20 à 50 µm et les épaisseurs des couches de résine époxy réticulée renforcée se situe dans la gamme de 5 à 15 fois l'épaisseur (moyenne) de la ou des couches de polymére linéaire.

10. Procédé pour la préparation des composites suivant la revendication 1, qui consiste à empiler des couches d'un système de résine époxy réticulable, renforcée aux fibres et une ou plusieurs couches du polymère linéaire dans un agencement alterné et à convertir la pile ainsi obtenue en un composite en durcissant la résine époxy tout en appliquant une pression sur les couches empilées.

11. Procédé suivant la revendication 10, caractérisé en ce que le système de résine époxy réticulable, renforcée aux fibres est un préimprégné à base du système de résine époxy et en ce que la couche du polymère linéaire est utilisée sous la forme d'un film de polymère.

12. Procédé suivant l'une ou l'autre des revendications 10 et 11, caractérisé en ce que le durcissement est réalisé à une température dans l'intervalle de 125 à 200°C et pendant un temps suffisant pour obtenir une matrice de résine époxy réticulée et une bonne adhérence interlaminaire à la température opérationnelle.
